# EUROPEAN PATENT SPECIFICATION

(11) **EP 0 647 939 B1**
(45) Date of publication and mention of the grant of the patent: **05.04.2000**
(21) Application number: 94306549.0
(22) Date of filing: 06.09.1994
(51) Int. Cl.: G11B 15/087, H04N 9/79

(54) **Automatic discrimination of scanning modes by which video signals were recorded**
Automatische Unterscheidung von Abtastmodi mit welchen Videosignale aufgezeichnet worden sind
Discrimination automatique des modes de balayage selon lesquels des signaux vidéo ont été enregistrés

(30) Priority: 07.09.1993 JP 24635393
(43) Date of publication of application: 12.04.1995
(73) Proprietor: SONY CORPORATION, Tokyo 141 (JP)
(72) Inventor: Haseno, Shinichi, c/o Int. Prop. Div., Shinagawa-ku, Tokyo 141 (JP); Takahashi, Toshimasa, c/o Int. Prop. Div., Shinagawa-ku, Tokyo 141 (JP); Matsuno, Katsumi, c/o Int. Prop. Div.,, Shinagawa-ku, Tokyo 141 (JP)
(74) Representative: Cotter, Ivan John

(56) References cited:
- EP-A- 0 228 240
- GB-A- 2 114 849
- US-A- 4 346 397
- PATENT ABSTRACTS OF JAPAN vol. 6, no. 72 (E-105) 7 May 1982 & JP-A-57 011 586 (TOSHIBA CORP.) 21 January 1982
- PATENT ABSTRACTS OF JAPAN vol. 15, no. 58 (E-1032) 12 February 1991 & JP-A-02 285 780 (SONY CORP) 26 November 1990
- PATENT ABSTRACTS OF JAPAN vol. 9, no. 159 (E-326) 4 July 1985 & JP-A-60 035 888 (MATSUSHITA DENKI SANGYO K.K.) 23 February 1985
- PATENT ABSTRACTS OF JAPAN vol. 6, no. 72 (E-105) 7 May 1982 & JP-A-57 011 590 (TOSHIBA CORP.) 21 January 1982
- PATENT ABSTRACTS OF JAPAN vol. 5, no. 99 (E-063) 26 June 1981 & JP-A-56 043 891 (SONY CORP.) 22 April 1981
- PATENT ABSTRACTS OF JAPAN vol. 11, no. 220 (E-524) 16 July 1987 & JP-A-62 039 995 (FUJITSU LTD) 20 February 1987

## Description

This invention relates to automatic discrimination between one scanning mode and another by which video signals were recorded on a recording medium, such as a tape, with a video recorder/reproducer, such as a video tape recorder.

As well known, various modes of scanning video signals are employed worldwide. Apart from the scanning modes, there are also various modes for modulating luminance signals and color-difference signals. In view of this, some video tape recorders (hereinafter called VTRs) or other video signal recorders/reproducers are designed to cope with some different broadcasting modes.

In order to reproduce video signals recorded in different areas using different broadcasting modes, such a video signal recorder/reproducer includes a plurality of signal processing circuits in accordance with respective recording formats such that one of the circuits is selectively activated to reproduce a particular signal in accordance with the format used in recording the particular signal. Typically, users can select one of the signal processing circuits by manipulation of a changeover switch. Differences in scanning mode are greatly related to track patterns on recording media, and inconsistency in scanning mode makes it impossible to even obtain reproduced signals from a recording medium. Discrimination of scanning modes is therefore considered difficult.

In this respect, a method for automatically discriminating scanning modes has been put in practical use. The method discriminates scanning modes by counting the number of horizontal synchronizing signals contained in a field.

The method may enable discrimination of scanning modes with a sufficient preciseness during a normal reproducing operation. However, during a reproducing operation at a different speed, such as "cue" or "review", noise bars appear on the screen and disturb precise discrimination. If an error occurs in discrimination, a large noise enters in the reproduced signal. That is, this method is weak at noises, and it is liable to cause errors in determination.

Japanese patent application JP-A-57011586 describes a video signal reproducing apparatus that includes a rotatable drum for reproducing recorded video signals from a video tape and a motor for rotating the rotatable drum. Means are provided for measuring the frequency of the horizontal synchronising signals included in the recorded signals. Also, discriminating means are provided to determine whether a detected horizontal scanning frequency is within normal limits using a single one band-pass filter. If the horizontal scanning frequency is within the normal limits (that is, the recording mode and the reproducing mode are the same), the running speed of the tape and head is unchanged. If the horizontal scanning frequency is outside of the normal limits (that is, the recording mode and the reproducing mode are different), the running speed of the tape and head is changed. Accordingly, it can be seen that in this apparatus, a detection is made as to whether a current scanning mode is correct or incorrect. Japanese patent application JP-A-60035888 also discloses video reproducing apparatus providing discrimination on the basis of horizontal scanning frequency.

The present invention is concerned with automatically discriminating scanning modes with better precision.

In accordance with one aspect of the present invention there is provided circuitry for automatically discriminating scanning modes in a video signal reproducing apparatus that includes a rotatable drum for reproducing recorded video signals from a video tape, and a motor for rotating said rotatable drum, said circuitry comprising: measuring means for measuring a period of horizontal synchronizing signals included in said recorded signals; first comparator means comparing said period of horizontal synchronizing signals with a first reference signal, which is the period of the horizontal synchronizing signals detected when the signals recorded with a first scanning mode is reproduced with a second scanning mode; second comparator means comparing said period of horizontal synchronizing signals with a second reference signal, which is the period of the horizontal synchronizing signals detected when the signals recorded with a second scanning mode is reproduced with a first scanning mode; and controlling means arranged, in the case that said first comparator means determines coincidence between said period of horizontal synchronizing signals and first reference signal, to cause reproduction of said recording signals using said first scanning mode, and, in the case that said second comparator means determines coincidence between said period of horizontal synchronizing signals and said second reference signal, to cause reproduction of said recording signals using said second scanning mode.

In accordance with another aspect of the invention, there is provided a video signal reproducing apparatus comprising: a rotatable drum for reproducing recorded video signals from a video tape; a motor for rotating said rotatable drum; measuring means for measuring a period of horizontal synchronising signals included in said recorded signals; first comparator means comparing said period of horizontal synchronizing signals with a first reference signal, which is the period of the horizontal synchronizing signals detected when the signals recorded with a first scanning mode is reproduced with a second scanning mode; second comparator means comparing said period of horizontal synchronizing signals with a second reference signal, which is the period of the horizontal synchronizing signals detected when the signals recorded with a second scanning mode is reproduced with a first scanning mode; and controlling means arranged, in the case that said first comparator means determines coincidence between said period of horizontal synchronizing signals and first reference signal, to cause reproduction of said recording signals using said first scanning mode, and, in the case that said second comparator means determines coincidence between said period of horizontal synchronizing signals and said second reference signal, to cause reproduction of said recording signals using said second scanning mode.

In accordance with a further aspect of the present invention, there is provided a method of automatically discriminating scanning modes in a video signal reproducing apparatus that includes a rotatable drum for reproducing recorded video signals from a video tape and a motor for rotating said rotatable drum, the method comprising: measuring a period of horizontal synchronizing signals included in said recorded signals, comparing said period of horizontal synchronizing signals with a first reference signal, which is the period of the horizontal synchronizing signals detected when the signals recorded with a first scanning mode is reproduced with a second scanning mode, and comparing said period of horizontal synchronizing signals with a second reference signal, which is the period of the horizontal synchronizing detected when the signals recorded with a second scanning mode is reproduced with a first scanning mode; and in the case that coincidence between said period of horizontal synchronizing signals and said first reference signal is determined, causing reproduction of said recording signals using said first scanning mode, and, in the case that coincidence between said period of horizontal synchronizing signals and said second reference signal is determined, causing reproduction of said recording signals using said second scanning mode.

When the reproduction is not done properly, periods of horizontal synchronizing signals of the two scanning modes become largely distant. These largely distant periods of horizontal synchronizing signals are compared with two reference signals in a comparing portion, and a switching signal is sent to a servo control circuit.

A specific embodiment of the present invention will now be described by way of example with reference to the accompanying drawings, in which:
Fig. 1 is a diagram showing a principle of a video tape recorder to which the present invention is applied;
Fig. 2 is a diagram indicating periods of horizontal synchronizing signals supplied to a comparing portion;
Fig. 3 is a block diagram of a pulse period measuring circuit to which a method for automatically discriminating scanning modes according to the invention is applied; and
Figs. 4A and 4B are flow charts indicating an algorithm for automatically discriminating scanning modes by using the pulse period measuring circuit.

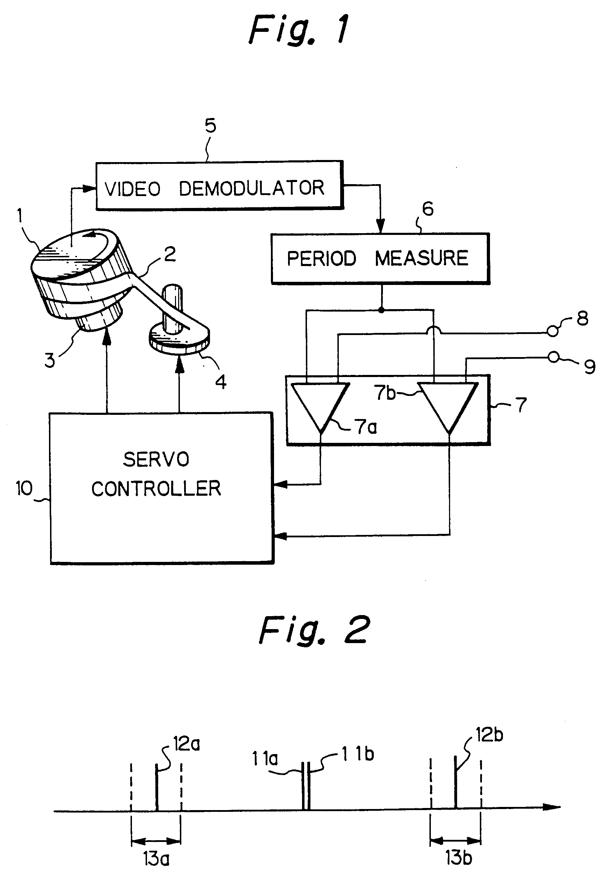

Fig. 1 is a block diagram of the VTR, which shows a principle of the method for automatically discriminating scanning methods according to the invention. For simplicity, here is taken a case where two scanning modes, namely, the NTSC mode (525 lines (number of scanning lines) and 60Hz (vertical scanning period)) and the PAL mode (625 lines and 50Hz), are to be discriminated.

In Fig. 1, a rotating drum 1 is provided with a recording head and a reproducing head (neither shown), and is wound with a magnetic tape 2 on which video signals have been recorded. The rotating drum 1 is rotated by a drum motor 3. The magnetic tape 2 is fed out by a capstan motor 4. Signals reproduced by the reproducing head are supplied to a video demodulating circuit 5, and are demodulated through predetermined processing. At the same time, horizontal synchronizing signals of the recorded signals are also demodulated. The horizontal synchronizing signals output from the video demodulating circuit 5 are supplied to a period measuring portion 6.

The period measuring portion 6 measures the period of the horizontal synchronizing signals supplied. If the video signals reproduced by the reproducing head are of the mode of 525 lines and 60Hz, then the period of the horizontal synchronizing signals is about 63.5µs. If they are of the mode of 626 lines and 50Hz, the period is about 64µs. The period measuring portion 6 gives its output signal to a comparing portion 7 including comparators 7a and 7b. The comparator 7a is supplied with a first reference signal from a terminal 8, and the comparator 7b with a second reference signal from a terminal 9. The comparing portion 7 compares the period of horizontal synchronizing signals measured by the period measuring portion 6 with the predetermined reference signals, and generates and supplies a switching signal to a servo control circuit 10 referred to later. Outputs from the comparators 7a and 7b are supplied to the servo control circuit 10. In response to the switching signal received, the servo control circuit 10 supplies a control signal to the drum motor 3 and to the capstan motor 4.

Fig. 2 shows how to discriminate periods of horizontal synchronizing signals in reproduced signals measured by the period measuring portion 6, taking periods of horizontal synchronizing signals along the abscissa. In Fig. 2, when reproduction of signals is being carried out properly (when a signal with the mode of 525 lines and 60Hz is being reproduced in the mode of 525 lines and 60 Hz or when a signal with the mode of 625 lines and 50 Hz is being reproduced in the mode of 625 lines and 50 Hz), periods of the respective horizontal synchronizing signals are close to each other as shown at lla (horizontal synchronizing signals in the mode of 525 lines and 60Hz) and 11b (horizontal synchronizing signals in the mode of 625 lines and 50Hz).

On the other hand, when reproduction of signals is being carried out erroneously (when a signal recorded in the mode of 525 lines and 60Hz is being reproduced in the mode of 625 lines and 50Hz or when signals with the mode of 625 lines and 50Hz are being reproduced in the mode of 525 lines and 60 Hz), periods of the respective horizontal synchronizing signals are far apart as shown at 12a (horizontal synchronizing signals recorded in the mode of 525 lines and 60Hz but reproduced in the mode of 625 lines and 60Hz) and 12b (horizontal synchronizing signal recorded in the mode of 525 lines and 60Hz but reproduced in the mode of 625 lines and 50 Hz) for the reasons shown below. That is, the rotating head for reproducing signals recorded on a tape rotates at the speed of rotation synchronizing with a vertical scanning frequency, and these two scanning modes have a relatively large difference in vertical scanning frequency as large as 59.96:50. Therefore, if reproduction is done in a wrong scanning mode, periods of horizontal synchronizing signals of the reproduced signals obtained from the rotating head are detected as having a large difference as large as about 20% although the periods of their normal horizontal synchronizing signals are substantially the same, because the speed of the reproducing head relative to the tape varies. That is, the large separation of 12a and 12b is caused by the speed of the reproducing head relative to a magnetic tape used as a recording medium being substantially proportional to the period of the vertical synchronizing signal. A range 13a defined about 12a is the range for the comparator 7b to determine coincidence of a measured period therewith, and a range 13b defined about 12b is the range for the comparator 7a to determine coincidence of a measured period therewith.

The comparing portion 7 compares the largely distant periods shown at 12a and 12b of the horizontal synchronizing signals with two reference signals, and if necessary, supplies a switching signal to the servo control circuit 10. For example, in case of Fig. 2, if the measured period of the horizontal synchronizing signals is near the first reference signal supplied through the terminal 8, it is determined that a video signal recorded in the mode of 525 lines and 60Hz is erroneously being reproduced in the mode of 625 lines and 50 Hz by the servo control circuit 10, and the comparing portion 7 supplies the servo control circuit 10 with a switching signal to make it execute a servo operation in the mode of 525 lines and 60Hz corresponding to the scanning mode for signals on the tape. If the reproduction proceeds in an erroneous scanning mode, the reproducing head moves across recording tracks on the tape and causes reproduced signals to be cut into pieces by a noise. Nevertheless, even with such intermittent reproduced signals, because the period of horizontal synchronizing signals is as short as 100µs, it is sufficiently possible to measure the period of its horizontal synchronizing signals, and a high speed discrimination is possible. In response to the switching signal, the servo control circuit 10 outputs a control signal for the mode of 525 lines and 60Hz to the drum 3 and to the capstan 4.

On the other hand, if the measured period of the horizontal synchronizing signals is near the second reference signal supplied through the terminal 9, then it is determined that a video signal recorded in the mode of 625 lines and 50Hz is erroneously being reproduced in the mode of 525 lines and 60Hz by the servo control circuit 10, and the comparing portion 7 supplies the servo control circuit 10 with a switching signal to make it execute a servo operation in the mode of 625 lines and 50 Hz corresponding to the scanning mode for signals on the tape. In response to the switching signal, the servo control circuit 10 outputs a control signal for the mode of 625 lines and 50Hz to the drum 3 and to the capstan 4.

Although an operation has been explained above with regards a case for discriminating two scanning modes for simplicity, discrimination of three or more scanning modes can readily be realized on the basis of the same concept.

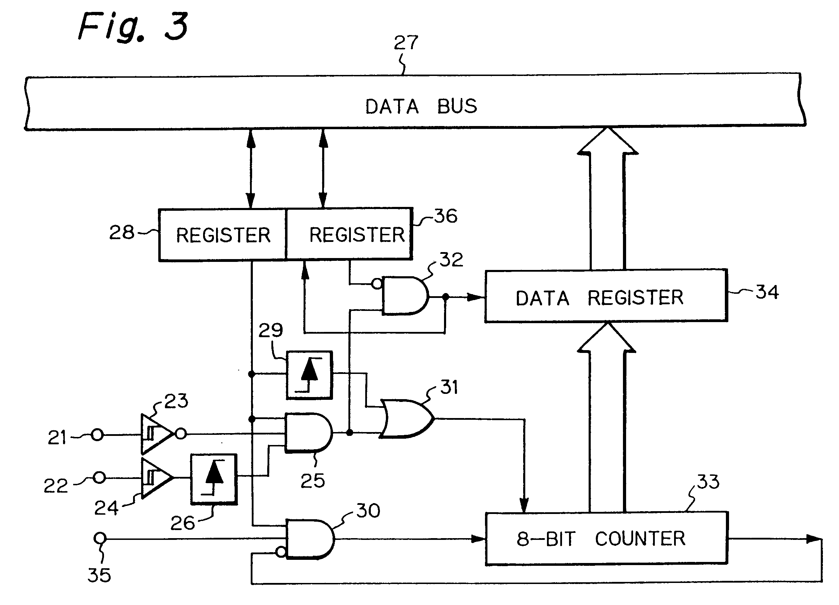

Fig. 3 is a block diagram of a pulse period measuring circuit to which a method for automatically discriminating scanning modes according to the invention is applied. The pulse period measuring circuit is coupled to a controller via a data bus such that the mode of driving a tape is changed by the controller.

In Fig. 3, a mask signal and a horizontal synchronizing signal are input through a terminal 21 and a terminal 22, respectively. The mask signal is used to stop measurement of a period in the absence of a reproduced signal from the reproducing head in order to prevent distortion in measurement of the periods due to a noise caused by reproduction in a wrong scanning mode. That is, for preventing an erroneous operation caused by a noise, a horizontal synchronizing signal input from the terminal 22 is masked when no reproduced signal is supplied from the reproducing head. The respective signals from the terminals 21 and 22 are waveform-shaped in waveform shaping circuits 23 and 24. The waveform shaping circuit 23 outputs an inverted signal to a first input terminal of an AND circuit 25. The waveform shaping circuit 24 outputs a signal such that a rising detecting circuit 26 detects the rising edge of the signal. The rising detecting circuit 26 gives its output signal to a second input terminal of the AND circuit 25.

An 8-bit counter start flag, which is input from the controller (not shown) through the data bus 27, is supplied to a register 28. The 8-bit counter start flag is one for starting measurement of periods and for behaving as an interface with software. An output signal from the register 28 is applied to a rising detecting circuit 29, a third input terminal of the AND circuit 25 and a first input terminal of an AND circuit 30. A signal detected by the rising detecting circuit 29 is supplied to a first input terminal of an OR circuit 31. An output signal from the AND circuit 25 is supplied to a second input terminal of the OR circuit 31 and to a first input terminal of an AND circuit 32. An output signal from the OR circuit 31 is supplied to an 8-bit counter 33 as a clear signal.

A clock signal for measurement of periods of horizontal synchronizing signals ia supplied to a second input terminal of the AND circuit 30 through a terminal 35. An output signal from the AND circuit 30 is supplied to the 8-bit counter 33. The 8-bit counter 33 counts the period measuring clock signals, and stops the counting when reaching the maximum value. When a horizontal synchronizing signal is input, the 8-bit counter 33 is cleared. The value of the 8-bit counter 33 is taken in a data register 34 in eight bits, and it is supplied to a third input terminal of the AND circuit in the negative logic. The value stored in the data register 34 indicates the period of the reproduced horizontal synchronizing signal.

A data register validity flag, which is input from the controller through the data bus 27 and indicating that an effective data is stored in the data register, is stored in a register 36 and then supplied to a second terminal of the AND gate 32 in the negative logic. On the basis of two signals supplied, the AND circuit 32 supplies a latch output signal to a data register 34 and to a register 36. In response to the latch output, an output signal from the data register 34 is supplied to the controller through the data bus 27.

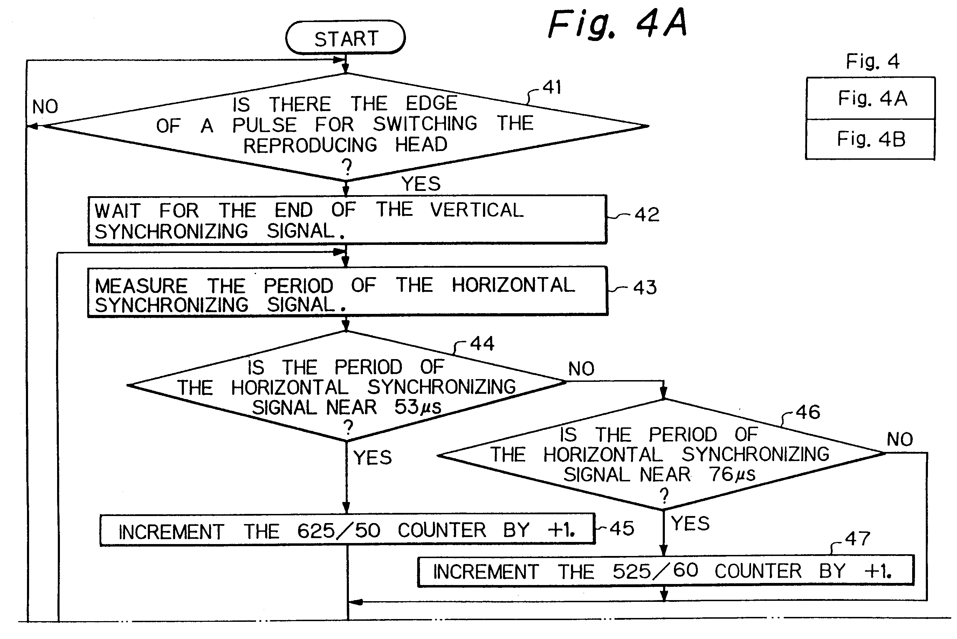

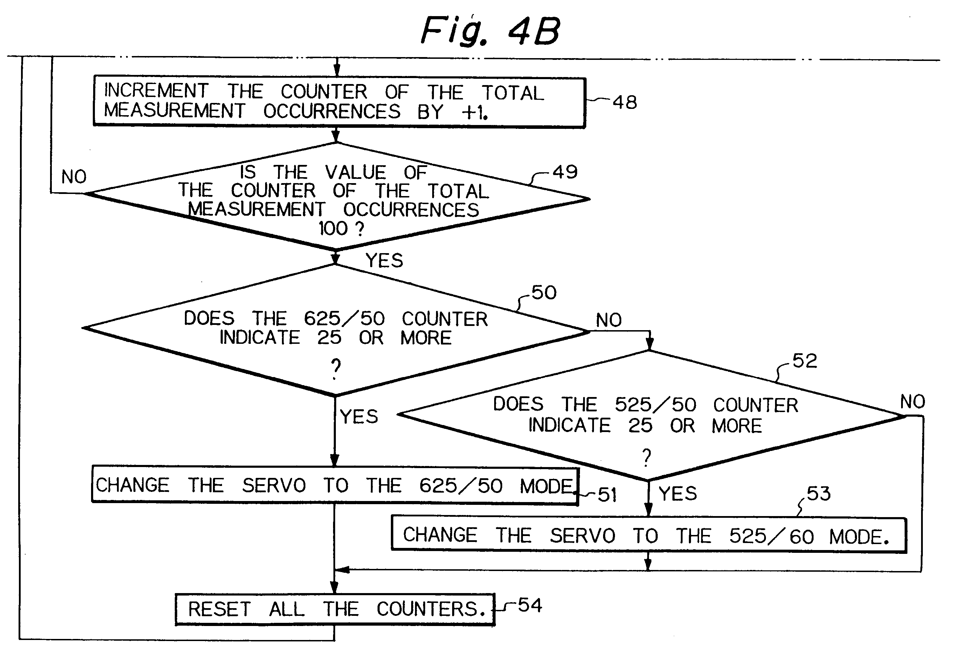

Figs. 4A and 4B is a flow chart showing an algorithm for automatically discriminating scanning modes, using the pulse period measuring circuit explained above. In order to start the measurement after a vertical synchronizing signal terminates, the edge of a pulse for switching the reproducing head is detected in step 41, and the end of the vertical synchronizing signal is waited for in step 42. After the period of the vertical synchronizing signal, measurement of the period of the horizontal synchronizing signal is started (step 43). Measurement of the period of the horizontal synchronizing signal is conducted only for effective reproduced signals due to the behavior of the mask signal.

In step 44, it is judged whether or not the period of the horizontal synchronizing signal is near 53µs (reference value). This reference value is a horizontal synchronizing period when signals recorded on a tape in the mode of 625 lines 50Hz have been reproduced in the mode of 525 lines and 60Hz. If the period of the horizontal synchronizing signal is near 53µs, then it is possible that the servo operating mode is inconsistent with the scanning mode for signals on the tape, and the counter indicating the inconsistency is incremented by one (step 45). In step 44, if the period of the horizontal synchronizing signal is not near 53µs, the process goes to the step 46.

In step 46, it is judged whether or not the period of the horizontal synchronizing signal is near 76µs. If it is near 76µs, it is possible that the servo operating mode is inconsistent with the scanning mode on the tape, and the counter indicating the inconsistency is incremented by one (step 47). In the measurements in steps 44 and 46, comparison with the reference values is done with a certain margin, considering some error may occur in measurement.

The steps 45, 46 (when the period of the horizontal synchronizing signal is not near 76µs) and the step 47 are followed by step 48. That is, in step 48, the counter indicating the total occurrences of measurements is incremented by one. In step 49, it is judged whether or not the value of the counter indicating the total occurrences of measurements has reached 100. If it is below 100, the process is returned to step 43. If the total occurrences of measurements has reached 100, the process goes ahead to step 50.

In step 50, it is judged whether or not the value of the counter for the mode of 625 lines and 50Hz is 25 or more. If it is 25 or more, it is regarded that the servo operation mode is certainly inconsistent with the scanning mode of the signal recorded on the tape, and the servo operation is changed to the mode of 625 lines and 50Hz corresponding to the scanning mode of the signal recorded on the tape.

In step 50, if the value of the counter for the mode of 625 lines and 50Hz is less than 25, the process goes to step 52. In step 52, it is judged whether or not the value of the counter for the mode of 525 lines and 60Hz is 25 or more. If it is 25 or more, it is regarded that the servo operation mode is certainly inconsistent with the scanning mode of the signal recorded on the tape, and the servo operation is changed to the mode of 525 lines and 60Hz consistent with the scanning mode of the signal recorded on the tape (step 53). After the steps 51, 52 (in case of the value for the mode of 525 lines and 60Hz being less than 25) and 53, the process goes to step 54. In step 54, all the counters are reset for availability to the next measurement.

Many VTRs coping with a plurality of TV signal modes and suitable for employing the present invention use highly functional microcomputers for their control such that their servo control itself is realized by software. In these VTRs equipped with such software servo, the invention can be realized by incorporating some of servo functions in a servo control circuit and by incorporating the others of the servo functions in software.

Since the method described above for automatically discriminating scanning modes uses, for the discrimination, horizontal synchronizing signals amounting to several hundreds in a single picture plane, it ensures highly accurate discrimination and enables realization of units or apparatuses requiring no manipulation by users. Additionally, the method well matches with systems using a servo control circuit and can be brought in practice at a low cost. The method further enables realization of units or apparatuses taking only a short time for discrimination and excellent in manipulation.

## Claims

1. Circuitry for automatically discriminating scanning modes in a video signal reproducing apparatus that includes a rotatable drum (1) for reproducing recorded video signals from a video tape (2), and a motor (3) for rotating said rotatable drum, said circuitry comprising:
measuring means (6) for measuring a period of horizontal synchronizing signals included in said recorded signals;
first comparator means (7a) comparing said period of horizontal synchronizing signals with a first reference signal, which is the period of the horizontal synchronizing signals detected when the signals recorded with a first scanning mode is reproduced with a second scanning mode;
second comparator means (7b) comparing said period of horizontal synchronizing signals with a second reference signal, which is the period of the horizontal synchronizing signals detected when the signals recorded with a second scanning mode is reproduced with a first scanning mode;
controlling means arranged, in the case that said first comparator means determines coincidence between said period of horizontal synchronizing signals and first reference signal, to cause reproduction of said recording signals using said first scanning mode, and, in the case that said second comparator means determines coincidence between said period of horizontal synchronizing signals and said second reference signal, to cause reproduction of said recording signals using said second scanning mode.

2. Circuitry according to claim 1, wherein said apparatus further comprises a capstan motor and aid circuitry is arranged to drive said motor and said capstan motor according to result of said comparisons.

3. Circuitry according to claim 1 or claim 2, wherein a first horizontal synchronizing signal and a second horizontal synchronizing signal are about 63.5µs and 64µs respectively.

4. Circuitry according to any preceding claim, wherein a first vertical scanning frequency and a second vertical scanning frequency are about 60Hz and 50Hz, respectively.

5. A video signal reproducing apparatus comprising:
a rotatable drum (1) for reproducing recorded video signals from a video tape (2);
a motor (3) for rotating said rotatable drum;
measuring means (6) for measuring a period of horizontal synchronising signals included in said recorded signals;
first comparator means (7a) comparing said period of horizontal synchronizing signals with a first reference signal, which is the period of the horizontal synchronizing signals detected when the signals recorded with a first scanning mode is reproduced with a second scanning mode;
second comparator means (7b) comparing said period of horizontal synchronizing signals with a second reference signal, which is the period of the horizontal synchronizing signals detected when the signals recorded with a second scanning mode is reproduced with a first scanning mode;
controlling means arranged, in the case that said first comparator means determines coincidence between said period of horizontal synchronizing signals and first reference signal, to cause reproduction of said recording signals using said first scanning mode, and, in the case that said second comparator means determines coincidence between said period of horizontal synchronizing signals and said second reference signal, to cause reproduction of said recording signals using said second scanning mode.

6. Apparatus according to claim S comprising a capstan motor, wherein said motor and said capstan motor are driven according to a result of said comparisons.

7. Apparatus according to claim 5 or claim 6, wherein a first horizontal synchronizing signal and a second horizontal synchronising signal are about 63.5µs and 64µs respectively.

8. Apparatus according to any one of claims 5 to 7, wherein a first vertical scanning frequency and a second vertical scanning frequency are about 60Hz and 50Hz, respectively.

9. A method of automatically discriminating scanning modes in a video signal reproducing apparatus that includes a rotatable drum (1) for reproducing recorded video signals from a video tape (2) and a motor (3) for rotating said rotatable drum, the method comprising:
measuring a period of horizontal synchronizing signals included in said recorded signals,
comparing said period of horizontal synchronizing signals with a first reference signal, which is the period of the horizontal synchronizing signals detected when the signals recorded with a first scanning mode is reproduced with a second scanning mode, and comparing said period of horizontal synchronizing signals with a second reference signal, which is the period of the horizontal synchronizing signals detected when the signals recorded with a second scanning mode is reproduced with a first scanning mode; and
in the case that coincidence between said period of horizontal synchronizing signals and said first reference signal is determined, causing reproduction of said recording signals using said first scanning mode, and, in the case that coincidence between said period of horizontal synchronizing signals and said second reference signal is determined, causing reproduction of said recording signals using said second scanning mode.

## Patentansprüche

1. Schaltkreis für eine automatische Unterscheidung von Abtastbetriebsarten in einem Videosignal-Wiedergabegerät, das eine drehbare Trommel (1), um aufgezeichnete Videosignale von einem Videoband (2) wiederzugeben, sowie einen Motor (3) aufweist, um die drehbare Trommel in Drehung zu versetzen, wobei der Schaltkreis enthält:
eine Messeinrichtung (6), um ein Intervall der Zeilensynchronisiersignale zu messen, die in den aufgezeichneten Signalen enthalten sind;
einen ersten Vergleicher (7a), der das Intervall der Zeilensynchronisiersignale mit einem ersten Bezugssignal vergleicht, bei dem es sich um das Intervall der Zeilensynchronisiersignale handelt, die abgetastet werden, wenn die mit einer ersten Abtastbetriebsart aufgezeichneten Signale mit einer zweiten Abtastbetriebsart wiedergegeben werden;
einen zweiten Vergleicher (7b), der das Intervall der Zeilensynchronisiersignale mit einem zweiten Bezugssignal vergleicht, bei dem es sich um das Intervall der Zeilensynchronisiersignale handelt, die abgetastet werden, wenn die mit einer zweiten Abtastbetriebsart aufgezeichneten Signale mit einer ersten Abtastbetriebsart wiedergegeben werden;
eine Steuerstufe, die dann, wenn der erste Vergleicher eine Übereinstimmung zwischen dem Intervall der Zeilensynchronisiersignale und dem ersten Bezugssignal feststellt, so angeordnet wird, um eine Wiedergabe der Aufzeichnungssignale unter Verwendung der ersten Abtastbetriebsart zu veranlassen, und dann, wenn der zweite Vergleicher eine Übereinstimmung zwischen dem Intervall der Zeilensynchronisiersignale und dem zweiten Bezugssignal feststellt, so angeordnet wird, um eine Wiedergabe der Aufzeichnungssignale unter Verwendung der zweiten Abtastbetriebsart zu veranlassen.

2. Schaltkreis gemäß Anspruch 1, wobei das Gerät weiters einen Bandantriebsachsenmotor enthält und eine Hilfsstufe angeordnet ist, um den Motor und den Bandantriebsachsenmotor in Übereinstimmung mit den Vergleichsergebnissen anzutreiben.

3. Schaltkreis gemäß Anspruch 1 oder 2, wobei ein erstes Zeilensynchronisiersignal und ein zweites Zeilensynchronisiersignal etwa 63,5µs bzw. 64µs betragen.

4. Schaltkreis gemäß irgendeinem der bisherigen Ansprüche, wobei eine erste Bildabtastfrequenz und eine zweite Bildabtastfrequenz etwa 60Hz bzw. 50Hz betragen.

5. Videosignal-Wiedergabegerät, das enthält:
eine drehbare Trommel (1), um aufgezeichnete Videosignale von einem Videoband (2) wiederzugeben;
einen Motor (3), um die drehbare Trommel in Drehung zu versetzen;
eine Messeinrichtung (6), um ein Intervall der Zeilensynchronisiersignale zu messen, die in den aufgezeichneten Signalen enthalten sind;
einen ersten Vergleicher (7a), der das Intervall der Zeilensynchronisiersignale mit einem ersten Bezugssignal vergleicht, bei dem es sich um das Intervall der Zeilensynchronisiersignale handelt, die abgetastet werden, wenn die mit einer ersten Abtastbetriebsart aufgezeichneten Signale mit einer zweiten Abtastbetriebsart wiedergegeben werden;
einen zweiten Vergleicher (7b), der das Intervall der Zeilensynchronisiersignale mit einem zweiten Bezugssignal vergleicht, bei dem es sich um das Intervall der Zeilensynchronisiersignale handelt, die abgetastet werden, wenn die mit einer zweiten Abtastbetriebsart aufgezeichneten Signale mit einer ersten Abtastbetriebsart wiedergegeben werden;
sowie eine Steuerstufe, die dann, wenn der erste Vergleicher eine Übereinstimmung zwischen dem Intervall der Zeilensynchronisiersignale und dem ersten Bezugssignal feststellt, so angeordnet wird, um eine Wiedergabe der Aufzeichnungssignale unter Verwendung der ersten Abtastbetriebsart zu veranlassen, und dann, wenn der zweite Vergleicher eine Übereinstimmung zwischen dem Intervall der Zeilensynchronisiersignale und dem zweiten Bezugssignal feststellt, so angeordnet wird, um eine Wiedergabe der Aufzeichnungssignale unter Verwendung der zweiten Abtastbetriebsart zu veranlassen.

6. Gerät gemäß Anspruch 5 mit einem Bandantriebsachsenmotor, wobei der Motor und der Bandantriebsachsenmotor in Übereinstimmung mit den Vergleichsergebnissen angetrieben werden.

7. Gerät gemäß Anspruch 5 oder 6, wobei ein erstes Zeilensynchronisiersignal und ein zweites Zeilensynchronisiersignal etwa 63,5µs bzw. 64µs betragen.

8. Gerät gemäß irgendeinem der Ansprüche 5 bis 7, wobei eine erste Bildabtastfrequenz und eine zweite Bildabtastfrequenz etwa 60Hz bzw. 50Hz betragen.

9. Verfahren für die automatische Unterscheidung von Abtastbetriebsarten in einem Videosignal-Wiedergabegerät, das eine drehbare Trommel (1), um aufgezeichnete Videosignale von einem Videoband (2) wiederzugeben, sowie einen Motor (3) aufweist, um die drehbare Trommel in Drehung zu versetzen, wobei das Verfahren enthält:
Messen eines Intervalls der Zeilensynchronisiersignale, die in den aufgezeichneten Signalen enthalten sind;
Vergleichen des Intervalls der Zeilensynchronisiersignale mit einem ersten Bezugssignal, bei dem es sich um das Intervall der Zeilensynchronisiersignale handelt, die abgetastet werden, wenn die mit einer ersten Abtastbetriebsart aufgezeichneten Signale mit einer zweiten Abtastbetriebsart wiedergegeben werden, und Vergleichen des Intervalls der Zeilensynchronisiersignale mit einem zweiten Bezugssignal, bei dem es sich um das Intervall der Zeilensynchronisiersignale handelt, die abgetastet werden, wenn die mit einer zweiten Abtastbetriebsart aufgezeichneten Signale mit einer ersten Abtastbetriebsart wiedergegeben werden; und
dann, wenn eine Übereinstimmung zwischen dem Intervall der Zeilensynchronisiersignale und dem ersten Bezugssignal festgestellt wird, Veranlassen einer Wiedergabe der Aufzeichnungssignale unter Verwendung der ersten Abtastbetriebsart, und dann, wenn eine Übereinstimmung zwischen dem Intervall der Zeilensynchronisiersignale und dem zweiten Bezugssignal festgestellt wird, Veranlassen einer Wiedergabe der Aufzeichnungssignale unter Verwendung der zweiten Abtastbetriebsart.

## Revendications

1. Circuit pour discriminer automatiquement des modes de balayage dans un appareil de reproduction de signal vidéo qui comprend un tambour tournant (1) pour reproduire des signaux vidéo enregistrés à partir d'une bande vidéo (2), et un moteur (3) pour faire tourner ledit tambour tournant, ledit circuit comprenant :
un moyen de mesure (6) pour mesurer une période des signaux de synchronisation horizontale compris dans lesdits signaux enregistrés ;
un premier moyen comparateur (7a) comprenant ladite période des signaux de synchronisation horizontale avec un premier signal de référence, qui est la période des signaux de synchronisation horizontale détectée lorsque les signaux enregistrés avec un premier mode de balayage sont reproduits avec un second mode de balayage ;
un second moyen comparateur (7b) comparant ladite période des signaux de synchronisation horizontale avec un second signal de référence, qui est la période des signaux de synchronisation horizontale détectée lorsque les signaux enregistrés avec un second mode de balayage est reproduit avec un premier mode de balayage ;
un moyen de commande disposé, dans le cas où ledit premier moyen comparateur détermine la coïncidence entre ladite période des signaux de synchronisation horizontale et le premier signal de référence, pour provoquer la reproduction desdits signaux d'enregistrement en utilisant ledit premier mode de balayage, et, dans le cas où ledit second moyen comparateur détermine la coïncidence entre ladite période des signaux de synchronisation horizontale et ledit second signal de référence, pour provoquer la reproduction desdits signaux d'enregistrement en utilisant ledit second mode de balayage.

2. Circuit selon la revendication 1, dans lequel ledit appareil comprend en outre un moteur de cabestan et ledit circuit est disposé pour commander ledit moteur et ledit moteur de cabestan selon le résultat desdites comparaisons.

3. Circuit selon la revendication 1 ou la revendication 2, dans lequel un premier signal de synchronisation horizontale et un second signal de synchronisation horizontale sont respectivement environ 63,5 µs et 64 µs.

4. Circuit selon l'une quelconque des revendications précédentes, dans lequel une première fréquence de balayage vertical et une seconde fréquence de balayage vertical sont respectivement environ 60 Hz et 50 Hz.

5. Appareil de reproduction de signal vidéo comprenant :
un tambour tournant (1) pour reproduire des signaux vidéo à enregistrer à partir d'une bande vidéo (2) ;
un moteur (3) pour tourner ledit tambour tournant ;
un moyen de mesure (6) pour mesurer une période des signaux de synchronisation horizontale compris dans lesdits signaux enregistrés ;
un premier moyen comparateur (7a) comparant ladite période des signaux de synchronisation horizontale avec un premier signal de référence, qui est la période des signaux de synchronisation horizontale détectée lorsque les signaux enregistrés avec un premier mode de balayage sont reproduits avec un second mode de balayage ;
un second moyen comparateur (7b) comparant ladite période des signaux de synchronisation horizontale avec un second signal de référence, qui est la période des signaux de synchronisation horizontale détectée lorsque les signaux enregistrés avec un second mode de balayage sont reproduits avec un premier mode de balayage ;
un moyen de commande disposé, dans le cas où ledit premier moyen comparateur détermine la coïncidence entre ladite période des signaux de synchronisation horizontale et un premier signal de référence, pour provoquer la reproduction desdits signaux d'enregistrement en utilisant ladite première période de balayage, et, dans le cas où ledit second moyen comparateur détermine une coïncidence entre ladite période des signaux de synchronisation horizontale et ledit second signal de référence, pour provoquer la reproduction desdits signaux d'enregistrement en utilisant ledit second mode de balayage.

6. Appareil selon la revendication 5 comprenant un moteur de cabestan, dans lequel ledit moteur et ledit moteur de cabestan sont commandés selon un résultat desdites comparaisons.

7. Appareil selon la revendication 5 ou la revendication 6, dans lequel un premier signal de synchronisation horizontale et un second signal de synchronisation horizontale sont respectivement environ 63,5 µs et 64 µs.

8. Appareil selon l'une quelconque des revendications 5 à 7, dans lequel une première fréquence de balayage vertical et une seconde fréquence de balayage vertical sont respectivement environ 60 Hz et 50 Hz.

9. Procédé de détermination automatique des modes de balayage dans un appareil de reproduction de signal vidéo qui comprend un tambour tournant (1) pour reproduire des signaux vidéo enregistrés à partir d'une bande vidéo (2) et un moteur (3) pour tourner ledit tambour tournant, le procédé comprenant :
une mesure d'une période des signaux de synchronisation horizontale compris dans lesdits signaux enregistrés ;
comparaison de ladite période des signaux de synchronisation horizontale avec un premier signal de référence, qui est la période des signaux de synchronisation horizontale détectée lorsque les signaux enregistrés avec le premier mode de balayage sont reproduits avec un second mode de balayage, et comparaison de ladite période des signaux de synchronisation horizontale avec un signal de référence, qui est la période des signaux de synchronisation horizontale détectée lorsque les signaux détectés avec un second mode de balayage sont reproduits avec un premier mode de balayage ; et
dans le cas ou la coïncidence entre ladite période des signaux de synchronisation horizontale et le premier signal de référence est déterminée, forçage de la reproduction desdits signaux d'enregistrement en utilisant ledit premier mode de balayage et, dans le cas où la coïncidence entre ladite période des signaux de synchronisation horizontale et ledit second signal de référence est déterminée, forçage de la reproduction desdits signaux d'enregistrement en utilisant ledit second mode de balayage.
